(19) Europäisches Patentamt

European Patent Office

Office européen des brevets

(11) **EP 2 122 879 B1**

(12) **EUROPEAN PATENT SPECIFICATION**

(45) Date of publication and mention of the grant of the patent:
**11.05.2016 Bulletin 2016/19**

(51) Int Cl.:
*H04L 27/26* (2006.01)  *H04J 13/00* (2011.01)
*H04L 5/00* (2006.01)  *H04J 13/10* (2011.01)

(21) Application number: **08722526.4**

(22) Date of filing: **13.03.2008**

(86) International application number:
**PCT/JP2008/055154**

(87) International publication number:
**WO 2008/114837 (25.09.2008 Gazette 2008/39)**

(54) **SYSTEMS AND METHODS FOR GENERATING SEQUENCES THAT ARE NEAREST TO A SET OF SEQUENCES WITH MINIMUM AVERAGE CROSS-CORRELATION**

SYSTEME UND VERFAHREN ZUM ERZEUGEN VON SEQUENZEN, DIE EINER MENGE VON SEQUENZEN MIT MINIMALER MITTLERER KREUZKORRELATION AM NÄCHSTEN KOMMEN

SYSTÈMES ET MÉTHODES DE PRODUCTION DE SÉQUENCES LES PLUS PROCHES POSSIBLE D'UN ENSEMBLE DE SÉQUENCES AVEC UN MINIMUM DE CORRÉLATIONS CROISÉES MOYENNES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.03.2007 US 686251**
**30.10.2007 US 928092**

(43) Date of publication of application:
**25.11.2009 Bulletin 2009/48**

(73) Proprietor: **Huawei Technologies Co., Ltd.**
**Longgang District**
**Shenzhen, Guangdong 518129 (CN)**

(72) Inventor: **KOWALSKI, John, M.**
**Camas, Washington 98607 (US)**

(74) Representative: **Körber, Martin Hans**
**Mitscherlich PartmbB**
**Patent- und Rechtsanwälte**
**Postfach 33 06 09**
**80066 München (DE)**

(56) References cited:
**WO-A1-2006/134949**

- **SHARP: "Optimized UL RS Design, and some issues with current UL RS proposals", 3GPP TSG-RAN WG1#48BIS,, vol. R1-071494, 30 March 2007 (2007-03-30) , pages 1-19, XP008126883,**
- **DHILLON I S ET AL: "Designing Structured Tight Frames Via an Alternating Projection Method", IEEE TRANSACTIONS ON INFORMATION THEORY, IEEE PRESS, USA, vol. 51, no. 1, 1 January 2005 (2005-01-01), pages 188-209, XP011124786, ISSN: 0018-9448, DOI: 10.1109/TIT.2004.839492**
- **SHARP: 'UL RS via OZCL Sequences' 3GPP TSG-RAN WG1 #49BIS vol. R1-072719, 25 June 2007, XP008116551**
- **SHARP: 'Summary Results on OZCL Sequences for UL RS for LTE' 3GPP TSG-RAN WG1 #50 vol. R1-073319, 24 August 2007, XP050106951**
- **SHARP: 'Optimized UL RS Design - OZCL Sequences' 3GPP TSG-RAN WG1 #48BIS vol. R1-072053, 11 May 2007, XP008126888**
- **TROPP J.A. ET AL.: 'Designing Structured Tight Frames Via an Alternating Projection Method' IEEE TRANSACTIONS ON INFORMATION THEORY vol. 51, no. 1, January 2005, pages 188 - 209, XP011124786**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates generally to computers and computer-related technology. More specifically, the present invention relates to systems and methods that improve the design of reference signals for spatially multiplexed cellular systems.

Further, The present invention relates generally to computers and computer-related technology. More specifically, the present invention relates to systems and methods for generating sequences that are nearest to a set of sequences with minimum average cross-correlation.

BACKGROUND ART

A wireless communication system typically includes a base station in wireless communication with a plurality of user devices (which may also be referred to as mobile stations, subscriber units, access terminals, etc.). The base station transmits data to the user devices over a radio frequency (RF) communication channel. The term "downlink" refers to transmission from a base station to a user device, while the term "uplink" refers to transmission from a user device to a base station.

Orthogonal frequency division multiplexing (OFDM) is a modulation and multiple-access technique whereby the transmission band of a communication channel is divided into a number of equally spaced sub-bands. A sub-carrier carrying a portion of the user information is transmitted in each sub-band, and every sub-carrier is orthogonal with every other sub-carrier. Sub-carriers are sometimes referred to as "tones." OFDM enables the creation of a very flexible system architecture that can be used efficiently for a wide range of services, including voice and data. OFDM is sometimes referred to as discrete multi-tone transmission (DMT).

The $3_{rd}$ Generation Partnership Project (3GPP) is a collaboration of standards organizations throughout the world. The goal of 3GPP is to make a globally applicable third generation (3G) mobile phone system specification within the scope of the IMT-2000 (International Mobile Telecommunications-2000) standard as defined by the International Telecommunication Union. The 3GPP Long Term Evolution ("LTE") Committee is considering OFDM as well as OFDM/OQAM (Orthogonal Frequency Division Multiplexing/Offset Quadrature Amplitude Modulation), as a method for downlink transmission, as well as OFDM transmission on the uplink.

Wireless communications systems (e.g., Time Division Multiple Access (TDMA), Orthogonal Frequency-Division Multiplexing (OFDM)) usually calculate an estimation of a channel impulse response between the antennas of a user device and the antennas of a base station for coherent receiving. Channel estimation may involve transmitting known reference signals that are multiplexed with the data. Reference signals may include a single frequency and are transmitted over the communication systems for supervisory, control, equalization, continuity, synchronization, etc. Wireless communication systems may include one or more mobile stations and one or more base stations that each transmit a reference signal. Reference signals may be designed such that a mobile station may re-use a reference signal that was previously used by a different mobile station. However, a set of sequences used for multiple carrier transmission of reference signals for demodulation may increase storage requirements because there is no minimum cross-correlation. As such, benefits may be realized by providing systems and methods for generating sequences that are nearest to a set of sequences with minimum average cross-correlation.

Sharp: "Optimized UL RS Design, and some issues with current UL RS proposals" introduces the magnitude of the issue facing reference signal design, and the relative performance of truncated Zadoff-Chu and cyclically extended Zadoff-Chu sequences compared to a proposed optimized version Zadoff-Chu like sequences. Accordingly, the RS design for the 12-subcarrier case is optimized for re-use.

SHARP: "Summary Results on OZCL Sequences for UL RS for LTE", 3GPP TSG-RAN WG1 #50, 3GPP Draft; R1-073319, 20070815 3rd Generation Partnership Project (3GPP), introduces an optimization method of PAPR optimized sequence in time domain.

DISCLOSURE OF INVENTION

A method to generate sequences used for wireless communication systems is provided according to claim 1.

A communication device that transmits reference signals is provided according to claim 2.

BRIEF DESCRIPTION OF DRAWINGS

Exemplary embodiments of the invention will become more fully apparent from the following description and appended claims, taken in conjunction with the accompanying drawings. Understanding that these drawings depict only exemplary embodiments and are, therefore, not to be considered limiting of the invention's scope, the exemplary embodiments of the invention will be described with additional specificity and detail through use of the accompanying drawings in which:

Figure 1 illustrates an exemplary wireless communication system in which examples may be practiced;

Figure 2 illustrates some characteristics of a transmission band of an RF communication channel in accordance with an OFDM-based system;

Figure 3 illustrates communication channels that may exist between an Orthogonal frequency division multiplexing (OFDM) transmitter and an OFDM receiver according to an example;

Figure 4 illustrates one example of a multiple input multiple output (MIMO) system that may be implemented with the present systems and methods;

Figure 5 illustrates a block diagram of certain components in an example of a transmitter;

Figure 6 is a block diagram illustrating one example of components used to design a reference signal to be transmitted in a MIMO system;

Figure 7 is a flow diagram illustrating one example of a method for designing a reference signal in a MIMO system;

Figure 8 is a flow diagram illustrating a further example of an algorithm that may be utilized to design a reference signal;

Figure 9 is a flow diagram illustrating a method of an algorithm that may be utilized to design a reference signal in a MIMO system;

Figure 10 is a flow diagram illustrating a method for generating sequences that are nearest to a set of sequences with minimum average cross-correlation; and

Figure 11 illustrates various components that may be utilized in a communications device.

## BEST MODE FOR CARRYING OUT THE INVENTION

As used herein, the terms "an example," "example," "examples," "the example," "the examples," "one or more examples," "some examples," "certain examples," "one example," "another example" and the like mean "one or more (but not necessarily all) examples," unless expressly specified otherwise.

The term "determining" (and grammatical variants thereof) is used in an extremely broad sense. The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The phrase "based on" does not mean "based only on," unless expressly specified otherwise. In other words, the phrase "based on" describes both "based only on" and "based at least on."

Reference signals may be used in communication systems. Reference signals may include a single frequency and are transmitted over the communication systems for supervisory, control, equalization, continuity, synchronization, etc. Communication systems may include one or more mobile stations and one or more base stations that each transmit a reference signal. Reference signals may be designed such that a mobile station may re-use a reference signal that was previously used by a different mobile station or is used at the same time at another mobile station in another cell far enough apart so as to negligibly interfere. Truncation or cyclic extension of a particular set of Zadoff-Chu sequences has been utilized to design reference signals for re-use. However, truncation or cyclic extension may result in a tedious integer programming problem for a sequence assignment. In addition, a guarantee of minimal correlation does not exist when truncation or cyclic extension of a particular set of Zadoff-Chu sequences are implemented. Further, because of variable correlation properties of candidate proposed reference signals, detailed planning regarding the mobile station may be done which may be particularly vexing if adjacent networks exist in the same band that are operated by different operators.

The present systems and methods design reference signals for multiple input multiple output (MIMO) systems in which reference signals are allocated amongst one or more mobile stations, for use in single user or multiple user MIMO systems. In one example, the present systems and methods design uplink reference signals in a cellular system. Communications from mobile stations to base stations may be classified as "uplink" communications. Conversely, communications from base stations to mobile stations may be classified as "downlink" communications. Transmitting uplink reference signals in a cellular system may pose stringent requirements on time and frequency resources on the mobile station. These stringent requirements may impede an optimum design of the reference signals for the mobile station, which may desire to implement a single or multiple carrier modulation with cyclic prefix, where there is synchronization between the transmission of multiple uplink signals and their respective base stations and where sectorization amongst cells of mobile stations is employed to maximize the capacity per cell. In addition, the present systems and methods employ multiple bandwidth allocations simultaneously to multiple base stations. In one example, each bandwidth segment allocated to a mobile station is an integer amount of some basic unit.

In designing a set of reference signals, certain design considerations may be implemented. For example, the set may be large enough to cover at least three sectors per cell, with at least two reference signals per sector. In one example, four reference signals per sector are present. A further design consideration may be that the set of reference signals may be orthogonal in each sector of a given cell. The set of reference signals may also be orthogonal in all sectors adjacent to a given sector. If the reference signals are orthogonal and the reference signals are known to adjacent sectors, a best minimum mean square receiver may be designed and implemented.

For those reference signals that are not in adjacent sectors, or which are not orthogonal, another design consideration may be that these reference signal are minimally correlated, with approximately the same correlation, and approach (if not meet) the Welch Bound. Sets of sequences that approach or meet the Welch Bound may denote a tight frame, where each vector possesses a unit norm, i.e., $\|\chi\eta\|_2 = 1$. A further design consideration is the set of reference signals may also have a Peak to Average Power Ratio (PAPR) that approaches (if not equal) to 1. The PAPR may be defined as, for a sequence vector c as:

$$P = \frac{\|c\|_\infty^2}{c^H c}, \qquad\qquad (Equation\ 1)$$

where $\|c\|_\infty^2$ denotes the square maximum modulus component of c and where $()^H$ denotes a conjugate transpose.

Another example of a design consideration may be that amongst subsets of sequences with orthogonal elements, each element may be a cyclic shift of another element. This property may be useful to provide robust performance if a transmission system which transmits a cyclic prefix for multipath elimination encounters multipath components with a delay spread greater than the cyclic prefix length. An additional design consideration is that in a system where multiple bandwidths are employed simultaneously, the set of reference signal sequences may be recursively generated from a base sequence.

In one example, the amount of reference signal space (time and frequency resources) may be exactly large enough. For example, the basic unit of bandwidth allocation may allow for 19 or any larger prime number of reference signals available for two reference signals per sector. In a further example, the basic unit of bandwidth allocation may allow for 37 or any larger prime number of reference signals for four reference signals per sector. As in this case, if the amount of reference signal space is exactly large enough, Zadoff-Chu sequences may be taken as the reference sequences as they meet the design considerations previously described. However, such resource availability or sequence numerology may not be plausible. The present systems and methods provide an algorithm for designing reference signals based on alternating projections when such resources or sequence numerology are not available.

In addition, the present systems and methods minimize the storage taken up by a set of sequences used for multiple carrier transmission of reference signals for demodulation that are designed to have minimum cross-correlation, subject to a cubic metric parameter. The set of sequences may be represented in the frequency domain prior to an inverse discrete Fourier Transform (IDFT). The IDFT may produce a time-domain waveform that is utilized to estimate channel characteristics for proper signal demodulation.

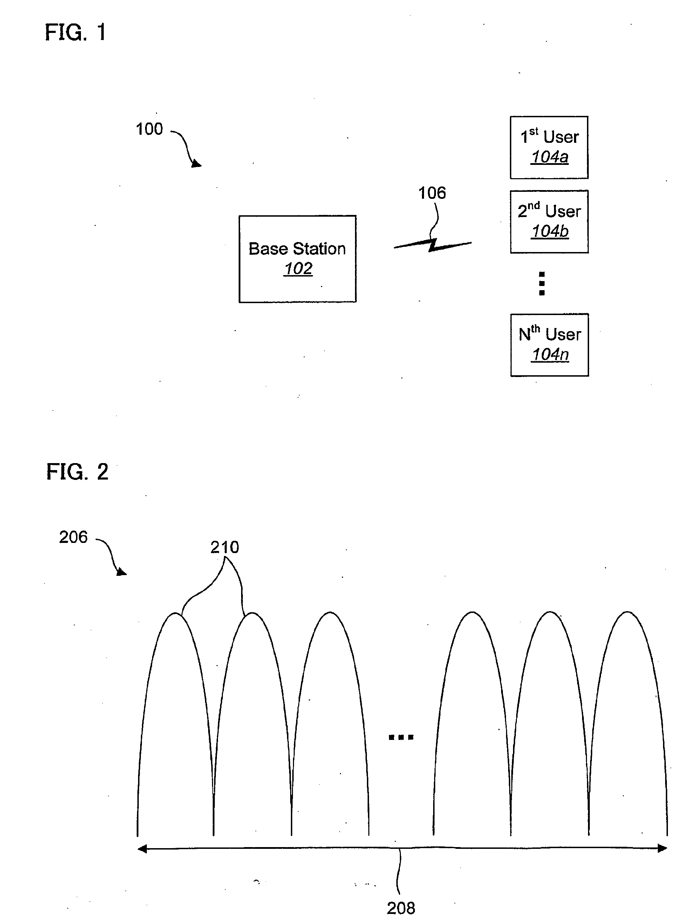

Figure 1 illustrates an exemplary wireless communication system 100 in which examples may be practiced. A base station 102 is in wireless communication with a plurality of user devices 104 (which may also be referred to as mobile stations, subscriber units, access terminals, etc.). A first user device 104a, a second user device 104b, and an Nth user device 104n are shown in Figure 1. The base station 102 transmits data to the user devices 104 over a radio frequency (RF) communication channel 106.

As used herein, the term "OFDM transmitter" refers to any component or device that transmits OFDM signals. An OFDM transmitter may be implemented in a base station 102 that transmits OFDM signals to one or more user devices 104. Alternatively, an OFDM transmitter may be implemented in a user device 104 that transmits OFDM signals to one or more base stations 102.

The term "OFDM receiver" refers to any component or device that receives OFDM signals. An OFDM receiver may be implemented in a user device 104 that receives OFDM signals from one or more base stations 102. Alternatively, an OFDM receiver may be implemented in a base station 102 that receives OFDM signals from one or more user devices 104.

Figure 2 illustrates some characteristics of a transmission band 208 of an RF communication channel 206 in accordance with an OFDM-based system. As shown, the transmission band 208 may be divided into a number of equally spaced sub-bands 210. As mentioned above, a sub-carrier carrying a portion of the user information is transmitted in each sub-band 210, and every sub-carrier is orthogonal with every other sub-carrier.

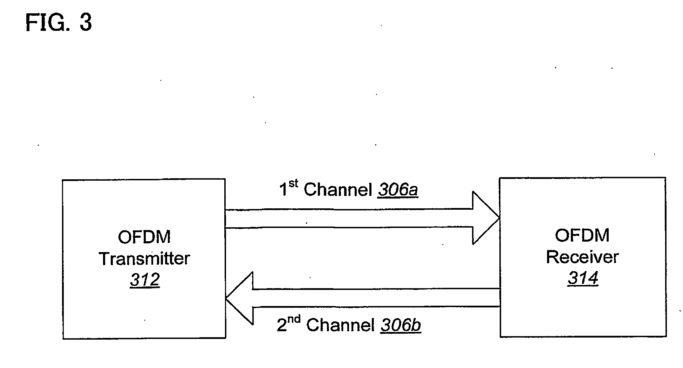

Figure 3 illustrates communication channels 306 that may exist between an OFDM transmitter 312 and an OFDM receiver 314 according to an example. As shown, communication from the OFDM transmitter 312 to the OFDM receiver 314 may occur over a first communication channel 306a. Communication from the OFDM receiver 314 to the OFDM transmitter 312 may occur over a second communication channel 306b.

The first communication channel 306a and the second communication channel 306b may be separate communication channels 306. For example, there may be no overlap between the transmission band of the first communication channel 306a and the transmission band of the second communication channel 306b.

In addition, the present systems and methods may be implemented with any modulation that utilizes multiple antennas/MIMO transmissions. For example, the present systems and methods may be implemented for MIMO Code Division Multiple Access (CDMA) systems or Time Division Multiple Access (TDMA) systems.

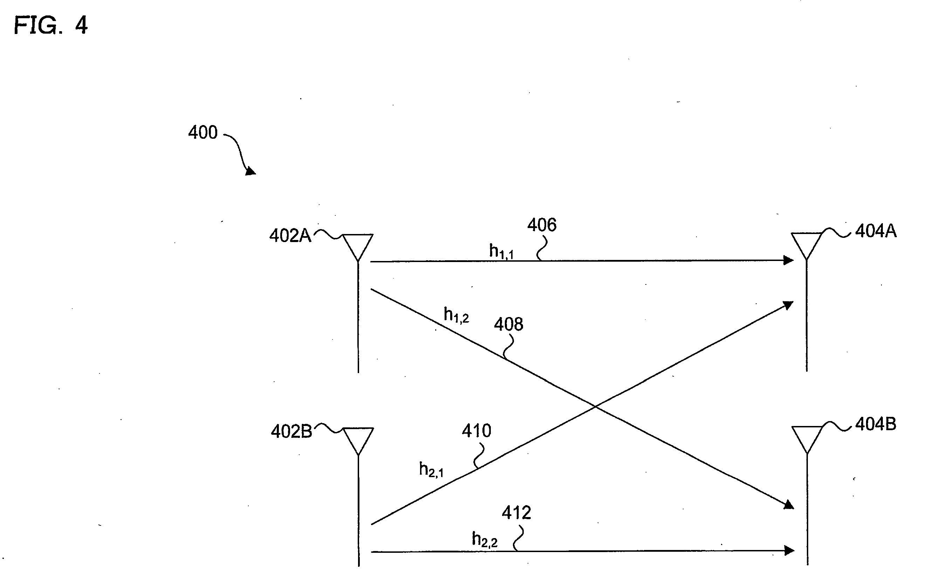

Figure 4 illustrates one example of a MIMO system 400 that may be implemented with the present systems and methods. The illustrated MIMO system 400 includes a first transmit antenna ($Tx_1$) 402A and a second transmit antenna ($Tx_2$) 402B. The system 400 also includes a first receive antenna ($Rx_1$) 404A and a second receive antenna ($Rx_2$) 404B. The transmit antennas 402A, 402B may be used to transmit a signal 406, 408, 410, 412 to the receive antennas 404A, 404B.

In single antenna systems, multi-path propagation may be detrimental to the performance of the system. The multiple propagation paths may cause "copies" of a signal to arrive at a receiver at slightly different times. These time delayed signals may then become interference when trying to recover the signal of interest. The MIMO system 400 is designed to exploit the multi-path propagation to obtain a performance improvement. For example, the first receive antenna ($Rx_1$) 404A may receive a mixture of a first signal 406 and a third signal 410 which are sent from the first transmit antenna ($Tx_1$) 402A and the second transmit antenna ($Tx_2$) 402B. The first and third signals 406, 410 may be sent over a first channel $h_{1,1}$ and a second third channel $h_{2,1}$. The proportion of the first and third signals that is received at the first receive antenna ($Rx_1$) 404A depends on the transmission channels $h_{1,1}$, $h_{2,1}$. A simplified equation for the signal received at the first receive antenna ($Rx_1$) 404A may be:

$$Rx_1 = (h_{1,1} \times Tx_1) + (h_{2,1} \times Tx_2) \qquad \text{(Equation 2)}$$

The first receive antenna ($Rx_1$) 404A receives a combination of what was transmitted from the first and second transmit antennas 402A, 402B. The MIMO system 400 may implement various coding schemes that define which signals 406, 408, 410, 412 should be transmitted, and at what times, to enable an original signal to be recovered when it is received in combination with another signal. These coding schemes may be known as "space-time" codes because they define a code across space (antennas) and time (symbols).

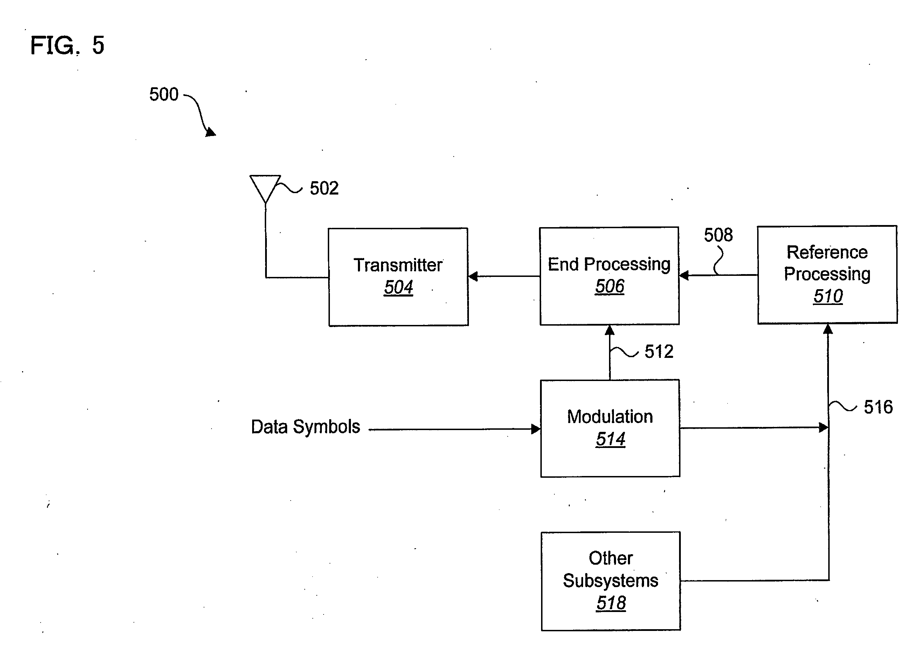

Figure 5 illustrates a block diagram 500 of certain components in an example of a transmitter 504. Other components that are typically included in the transmitter 504 may not be illustrated for the purpose of focusing on the novel features of the examples herein.

Data symbols may be modulated by a modulation component 514. The modulated data symbols may be analyzed by other subsystems 518. The analyzed data symbols 516 may be provided to a reference processing component 510. The reference processing component 510 may generate a reference signal that may be transmitted with the data symbols. The modulated data symbols 512 and the reference signal 508 may be communicated to an end processing component 506. The end processing component 506 may combine the reference signal 508 and the modulated data symbols 512 into a signal. The transmitter 504 may receive the signal and transmit the signal to a receiver through an antenna 502.

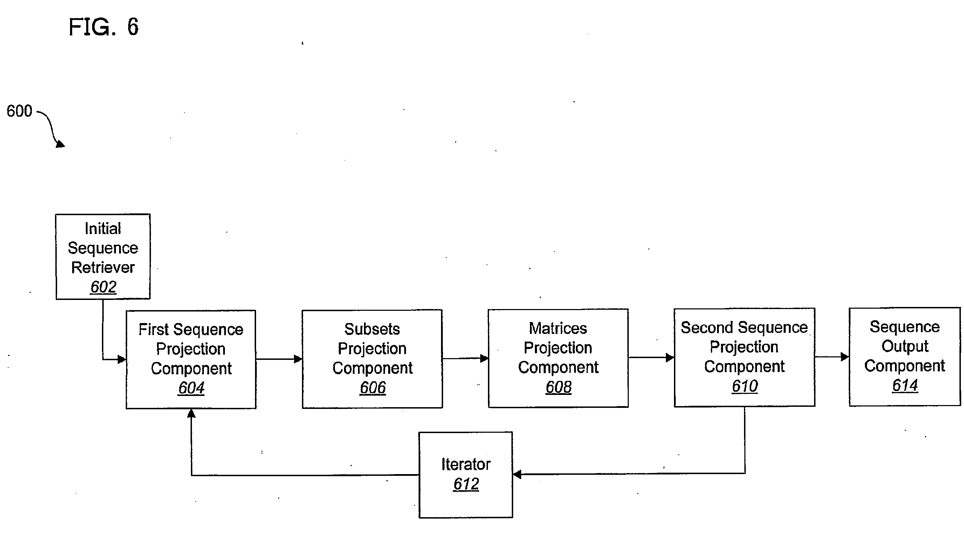

Figure 6 is a block diagram 600 illustrating one example of components used to design a reference signal to be transmitted in a MIMO system. In one example, an initial sequence retriever 602 may obtain initial sequences. A first sequence projection component 604 may project an obtained sequence set to a nearest tight frame. A subsets projection component 606 may be implemented to project subsets of the nearest tight frame to one or more orthogonal matrices. In one example, a matrices projection component 608 may project the one or more orthogonal matrices to a nearest circulant matrix. In one example, a second sequence projection component 610 may project each of the obtained sequence sets onto a minimum Peak to Average Power Ratio (PAPR) vector. An iterator 612 may be utilized to iterate the steps performed by the first sequence projection component 604, the subsets projection component 606, the matrics projection component 608 and the second sequence projection component 610. The iterator 612 may iterate these steps T times. A sequence output component 614 may output the sequences after T iterations have been executed.

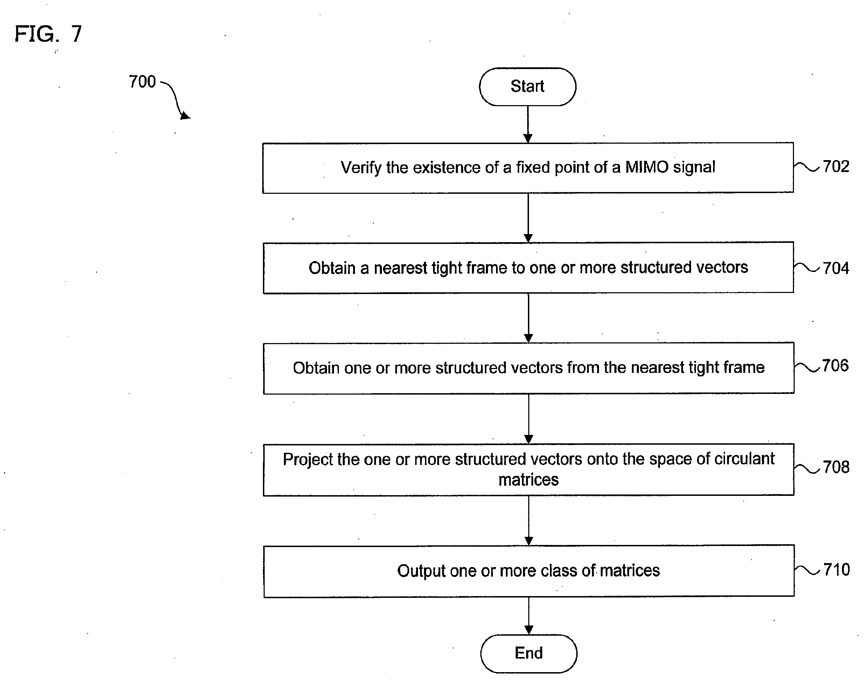

Figure 7 is a flow diagram illustrating one example of a method 700 for designing a reference signal in a MIMO system. The method 700 may be implemented by the components discussed previously in regards to Figure 6. In one example, the existence of a fixed point of a MIMO signal is verified 702. For example, for a set of Zadoff-Chu sequences of lengths 19 or 37 (as previously described), the Zadoff-Chu sequences may be returned as used as an input to design the reference signal. A nearest tight frame to one or more structured vectors may be obtained 704. One or more structured vectors may then be obtained 706 from the previously computed nearest tight frame. The one or more structured vectors may be projected 708 onto the space of circulant matrices and one or more classes of matrices may be outputted 710. The outputted matrices may indicate the design of the reference signal transmitted in a MIMO system.

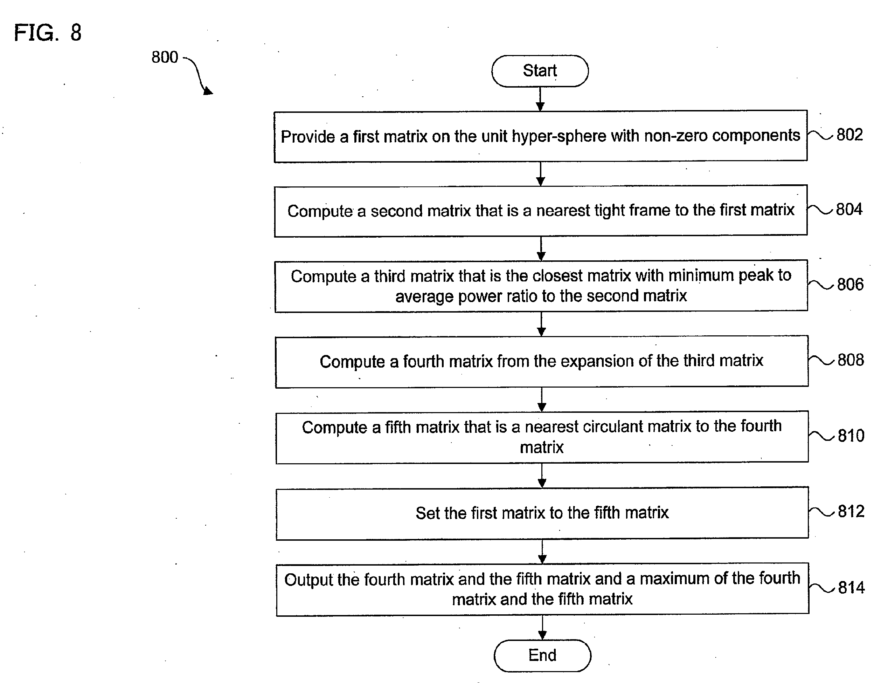

Figure 8 is a flow diagram 800 illustrating a further example of an algorithm that may be utilized to design a reference signal. In one example, a first matrix is provided 802. The first matrix may be on the unit hyper-sphere. Sequences may be on the unit hyper-sphere to ensure a satisfactory constant envelope property initially. The first matrix may include zero components if the starting sequence is on the unit hyper-sphere. A second matrix may be computed 804. The second matrix may be a nearest tight frame to the first matrix. The nearest tight frame may include an estimation of the first matrix.

In one example, a third matrix may be computed 806. The third matrix may be the closest matrix with a minimum peak to average power ratio to the second matrix. The third matrix may also be expanded and a fourth matrix may be computed 808 from the expansion. In one example, a fifth matrix is computed 810 that is a nearest circulant matrix to the fourth matrix. The first matrix may be set 812 to the fifth matrix. In other words, the first matrix may be assigned the included in the fifth matrix. The fourth matrix and the fifth matrix may be outputted 814. In addition, a maximum inner product of the fourth and fifth matrices may also be outputted 814.

The following may represent steps taken to compute a correlated set of matrices that is the closest matrix with a minimum peak to average power ratio. A sequence of N column vectors $\{x_n\}^N$ n=1, $x_n \in C^d$, $d \leq N$, may be assigned as columns of a matrix $X = [x_1\ x_2\ ...\ x_N]$. The matrix may be referred to as a frame. Each vector may have unit length, without any loss in generality. Block of K of these vectors may be grouped into a set of matrices, $\{X_i\}^K i=_1$ so that (with MK=N) $X = [X_1\ X_2\ ...\ X_M]$. The correlation between vectors may be represented as $<x_k, x_n>$ which is the standard inner product in complex Euclidean d-space.

The Welch Bound is, for any frame, for $k \neq n$:

$$\max_{k \neq n} < x_k, x_n > \geq \sqrt{\frac{N-d}{d(N-1)}} \qquad \text{(Equation 3)}$$

A frame that meets or approaches the Welch Bound may be referred to as a tight frame. The design considerations previously mentioned imply that for any $<x_k, x_n>$ not in the same $X_i$, $<x_k, x_n> \leq \alpha$, where $\alpha$ is a constant determined by the Welch Bound provided above. If any matrix $Z \in C^{d \times N}$, is provided, the matrix that comes closest in distance (as measured in element-wise or Frobenius norm) may be given by $\alpha (ZZ^H)^{1/2}Z$. This condition may also enforce an orthonormality condition between rows of X, if an optimal X exists.

The design considerations previously mentioned also imply that $X_i^* X_i = I_K$; (with $K \leq d$). In other words, each column in any $X_i$ may be orthogonal to any other column in $X_i$. The above may be repeated with the role of X above being assumed by $X_i^H$. Further, if as few as two sequences are required per cell (i.e., per matrix $X_i$), a "phase parity check" may be implemented to provide orthogonality between column vectors in $X_i$ when there are zero entries in any column of $X_i$. In other words, the phase of the zero components are chosen such that orthogonality if maintained once each column vector has minimal Peak to Average Power Ratio.

The following may illustrate steps taken to obtain the circulant matrix nearest to a given matrix. A matrix $Z = [z_1\ ...\ z_N]$, may be provided, where each $z_i$ is a column vector $\in C^N$. A circulant matrix $C = [c_0\ ...\ c_{N-1}]$, may be obtained that is closest in Frobenius (element-wise) norm to Z. In one example, F may be given as the Discrete Fourier Transform (DFT) matrix:

$$F = \begin{bmatrix} 1 & 1 & \cdots & 1 \\ 1 & e^{-j2\pi/N} & \cdots & e^{-j2\pi(N-1)/N} \\ \vdots & \vdots & \ddots & \vdots \\ 1 & e^{-j2\pi(N-1)/N} & \cdots & e^{-j2\pi(N-1)(N-1)/N} \end{bmatrix} \qquad \text{(Equation 4)}$$

A diagonal "delay" matrix D may be defined as $D = diag(1\ e^{-j2\pi/N}\ e^{-j2\pi/2/N}\ ...\ e^{-j2\pi/2/N})$. For any ciculant matrix C, $C = F^H \Lambda F$, where A is the DFT of the sequence/vector $c_0$. In addition, it may be shown that $c_{i+1\ mod\ N} = F^H DF\ c_i = (F^H DF)^{(i+1)\ mod\ N} c_0$. Then $\| Z - C \|^2_F = \sum_{i=1}^{N} \| Z_i - c_{i-1} \|^2 = \sum_{i=1}^{N} \| Z_i - (F^H DF)^{(i-1)} c_0 \|^2$

In one example,

$$\zeta = \begin{bmatrix} z_1 \\ z_2 \\ \vdots \\ z_N \end{bmatrix}, and B = \begin{bmatrix} I_N \\ F^H D F \\ \vdots \\ (F^H D F)^{N-1} \end{bmatrix}$$

to minimize $c_0$, which uniquely determines C,

$c_0$ is given by $c_0 = B^+ \zeta$,
where $B^+$ is the Moore-Penrose pseudo-inverse of B. In other words,
$B^+ = (B^H B)^{-1} B^H$.

Matrices where the number of column vectors are not equal to the number of row vectors may be referred to as reduced rank matrices (Z has fewer than N columns). Modifications may be implemented to the recurrence relation $c_{i+1 \bmod N} = F^H D F \, c_i$ and the forming of the appropriate matrix B. If only two vectors were required that were cyclic shifted three elements apart, then $c_1 = (F^H D F)^3 c_0$ and B may include the matrix elements $I_N$ and $(F^H D F)^2$.

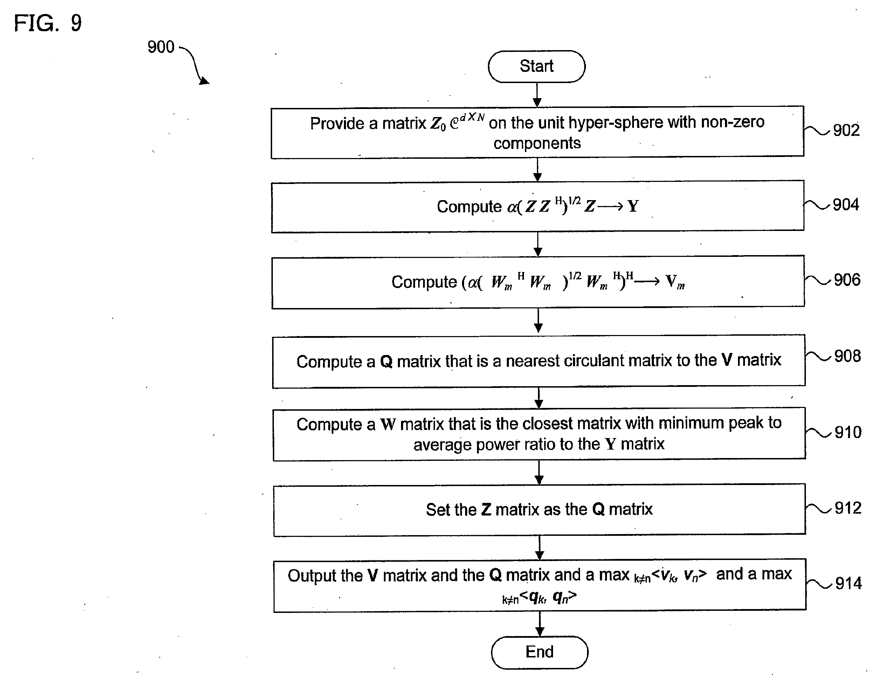

Figure 9 is a flow diagram 900 illustrating a method of an algorithm that may be utilized to design a reference signal in a MIMO system. A matrix $Z_0 \in C^{d \times N}$, may be provided 902. In one example, the matrix Zo is on the unit hypersphere with all non-zero components. The following may occur for t = 1 to T.

In one example, $\alpha (ZZ^H)^{1/2} Z$ may be computed 904 and assigned to the matrix Y. This may result in the tight frame nearest to Z. The following constraints may be implemented. If zero entries exist in column vectors of Y, phases to their related components in Y may be added so that orthogonality is maintained. For m = 1 to M, $(\alpha (Wm^H Wm)^{1/2} Wm^H)$ may be computed 906 and assigned to a vector $V_m$. The matrix $V = [V_1 \, V_2 \, ... \, V_M]$ may be assembled.

In one example, the $\max_{k \neq n} <v_k, v_n>$ may be computed. Further, a Q matrix may be computed 908 that is a nearest circulant matrix to V and $\max_{k \neq n} <q_k, q_n>$ may also be computed. A W matrix may be computed 910. The W matrix may be the closest matrix with minimum PAPR to Y. The W matrix may be expressed as $W = [W_1 \, W_2 \, ... \, W_M]$. The Z matrix may be assigned 912 as the Q matrix. If a circulant matrix is not desired, the Z matrix may be assigned as the V matrix. In one example, t is updated as t + 1. The V matrix and the Q matrix may be outputted 914. In addition, $\max_{k \neq n} <v_k, v_n>$ and $\max_{k \neq n} <q_k, q_n>$ may also be outputted 914.

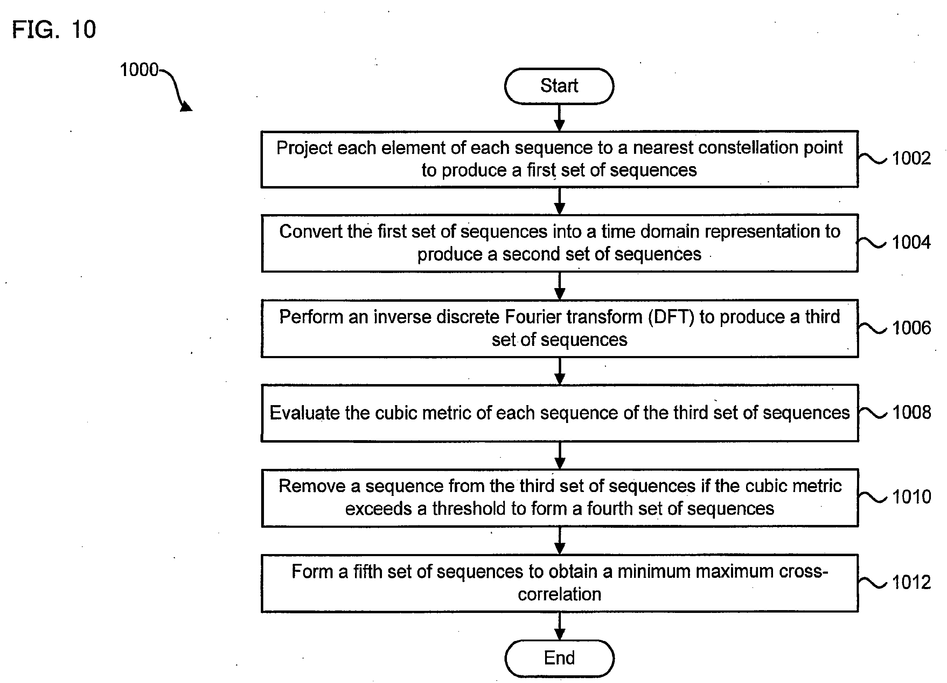

The matrices designed from the methods 700, 800, 900 described above in connection with Figures 7, 8 and 9 may be referred to as a set of sequences. Figure 10 is a flow diagram illustrating one example of a method 1000 for generating sequences that are nearest to a set of sequences with minimum average cross-correlation. In one example, the generated sequences may be quadrature phase shift-keyed (QPSK) sequences. The QPSK sequences may be generated for multiple carrier transmission modulated MIMO systems.

In one example, each element of each sequence designed from the methods 700, 800, 900 of Figures 7, 8 and 9 is projected 1002 to a nearest constellation point to produce a first set of sequences. The constellation point may be a QPSK constellation point. In other words, the first set of sequences may be defined by those sequences taken with elements drawn from the set $\{ \pm \sqrt{\frac{2}{2}} \pm j \sqrt{\frac{2}{2}} \}$. This may be done by projecting 1002 each element of each sequence and finding the point in the set $\{ \pm \sqrt{\frac{2}{2}} \pm j \sqrt{\frac{2}{2}} \}$ nearest, in Euclidean metric, to that element. From that resultant set, the first set of sequences may be produced. In one example, the first set of sequences are a set of QPSK sequences.

The first set of sequences may be converted 1004 to a second set of sequences that are in a time domain representation, from which N orthogonal cyclic shifts of a time domain waveform may be produced. N may represent the sequence length. An inverse discrete Fourier Transform (IDFT) may be performed 1006 on the second set of sequences to produce a third set of sequences. As an example, the third set is produced such that if one hundred root sequences were used to begin with, and the sequence length (N) was twelve, a set of 1200 sequences may be produced.

Each set of sequences within the third set may include one root sequence that is identical to the original sequence. In one example, the cubic metric of each sequence of the third set is evaluated 1008. Any sequence that is associated with a root sequence whose cubic metric exceeds a desired threshold may be removed 1010. In addition, other sequences associated with that root sequences may be removed from the third set. Once the sequences from the third set are removed, the remaining sequences form a fourth set of sequences.

In one example, a fifth set of sequences is formed 1012. A minimum maximum cross-correlation may be obtained from the fifth set of sequences.

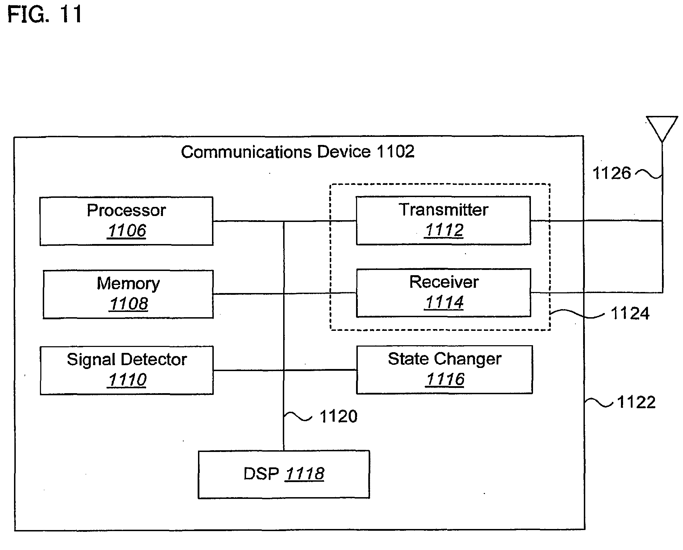

Figure 11 illustrates various components that may be utilized in a communications device 1102. The methods herein may be implemented by a communications device 1102. The communications device 1102 may include any type of communications device such as a mobile station, a cell phone, an access terminal, user equipment, a base station transceiver, a base station controller, etc. The communications device 1102 includes a processor 1106 which controls operation of the communications device 1102. The processor 1106 may also be referred to as a CPU. Memory 1108, which may include both read-only memory (ROM) and random access memory (RAM), provides instructions and data to the processor 1106. The instructions contain methods above-mentioned. The instructions are carried out by the processor 1106. A portion of the memory 1108 may also include non-volatile random access memory (NVRAM).

The communications device 1102 may also include a housing 1122 that includes a transmitter 1112 and a receiver 1114 to allow transmission and reception of data. The transmitter 1112 and receiver 1114 may be combined into a transceiver 1124. An antenna 1126 is attached to the housing 1122 and electrically coupled to the transceiver 1124. Additional antennas (not shown) may also be used.

The communications device 1102 may also include a signal detector 1110 used to detect and quantify the level of signals received by the transceiver 1124. The signal detector 1110 detects such signals as total energy, pilot energy, power spectral density, and other signals.

A state changer 1116 controls the state of the communications device 1102 based on a current state and additional signals received by the transceiver 1124 and detected by the signal detector 1110. The communications device 1102 may be capable of operating in any one of a number of states.

The various components of the communications device 1102 are coupled together by a bus system 1120 which may include a power bus, a control signal bus, and a status signal bus in addition to a data bus. However, for the sake of clarity, the various buses are illustrated in Figure 11 as the bus system 1120. The communications device 1102 may also include a digital signal processor (DSP) 1118 for use in processing signals. The communications device 1102 illustrated in Figure 11 is a functional block diagram rather than a listing of specific components.

Information and signals may be represented using any of a variety of different technologies and techniques. For example, data, instructions, commands, information, signals, bits, symbols, and chips the like that may be referenced throughout the above description may be represented by voltages, currents, electromagnetic waves, magnetic fields or particles, optical fields or particles or any combination thereof.

The various illustrative logical blocks, modules and circuits described in connection with the examples disclosed herein may be implemented or performed with a general purpose processor, a digital signal processor (DSP), an application specific integrated circuit (ASIC), a field programmable gate array signal (FPGA) or other programmable logic device, discrete gate or transistor logic, discrete hardware components or any combination thereof designed to perform the functions described herein. A general purpose processor may be a microprocessor, but in the alternative, the processor may be any conventional processor, controller, microcontroller or state machine. A processor may also be implemented as a combination of computing devices, e.g., a combination of a DSP and a microprocessor, a plurality of microprocessors, one or more microprocessors in conjunction with a DSP core or any other such configuration.

The steps of a method or algorithm described in connection with the examples disclosed herein may be embodied directly in hardware, in a software module executed by a processor or in a combination of the two. A software module may reside in any form of storage medium that is known in the art. Some examples of storage media that may be used include RAM memory, flash memory, ROM memory, EPROM memory, EEPROM memory, registers, a hard disk, a removable disk, a CD-ROM and so forth. A software module may comprise a single instruction, or many instructions, and may be distributed over several different code segments, among different programs and across multiple storage media. An exemplary storage medium may be coupled to a processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The methods disclosed herein comprise one or more steps or actions for achieving the described method. The method steps and/or actions may be interchanged with one another without departing from the scope of the claims. In other words; unless a specific order of steps or actions is required for proper operation of the example that is being described, the order and/or use of specific steps and/or actions may be modified without departing from the scope of the claims.

Functions such as executing, processing, performing, running, determining, notifying, sending, receiving, storing, requesting, and/or other functions may include performing the function using a web service. Web services may include software systems designed to support interoperable machine-to-machine interaction over a computer network, such as the Internet. Web services may include various protocols and standards that may be used to exchange data between applications or systems. For example, the web services may include messaging specifications, security specifications, reliable messaging specifications, transaction specifications, metadata specifications, XML specifications, management specifications, and/or business process specifications. Commonly used specifications like SOAP, WSDL, XML, and/or other specifications may be used.

While specific examples have been illustrated and described, it is to be understood that the claims are not limited to the precise configuration and components illustrated above. Various modifications, changes and variations may be made in the arrangement, operation and details of the examples described above without departing from the scope of the claims.

In one example, the constellation point is a quadrature phase-shift keying (QPSK) constellation point. Projecting each element of each sequence may include obtaining a point in the set $\{ \pm\sqrt{\frac{2}{2}} \pm j\sqrt{\frac{2}{2}} \}$ that is nearest to the element. The point in the set $\{ \pm\sqrt{\frac{2}{2}} \pm j\sqrt{\frac{2}{2}} \}$ that is nearest, in Euclidean metric, to the element may be obtained. Each sequence of the set of sequences may include a root sequence that is identical to an original sequence.

Sequences that are associated with the root sequence may be removed if a cubic metric of the root sequence exceeds a threshold. The set of sequences may be obtained by determining an input multiple input multiple output signal, obtaining a nearest tight frame to one or more given structured vectors, obtaining one or more structured vectors from the nearest tight frame, projecting the one or more structured vectors onto the space of circulant matrices and outputting one or more classes of matrices associated with reference signals.

The set of sequences may be a set of quadrature phase-shift keying (QPSK) sequences. The set of sequences may be converted to a time domain representation.

Further, the present invention includes following methods, transmitter, and computer-readable medium. As the methods, A method for using a numerical method to design reference signals for multiple input multiple output (MIMO) systems is described. An input multiple input multiple output signal is determined. A nearest tight frame to one or more given structured vectors is obtained. One or more structured vectors from the nearest tight frame is obtained. The one or more structured vectors are projected onto the space of circulant matrices. One or more classes of matrices associated with reference signals are outputted.

In one example, a set of reference signals is provided to cover three sectors of a cell. At least two reference signals per sector may be provided. The set of reference signals may be orthogonal in each sector of a given cell. The set of reference signals may be orthogonal in sectors adjacent to a given cell. Reference signals not in adjacent sectors may be minimally correlated. The set of reference signals may comprise a Peak to Average Power Ratio that approximates the value of one.

Multiple bandwidths may be employed simultaneously. A set of sequences may be recursively generated from a base sequence. A matrix may be provided on the unit hyper-sphere with non-zero components. The correlation between each of the one or more structured vectors may be outputted.

A sequence set may be projected to a nearest tight frame. Subsets of a nearest tight frame may be projected to one or more orthogonal matrices. One or more orthogonal matrices may be projected to a nearest circulant matrix. Each sequence may be projected onto a minimum Peak to Average Power Ratio vector.

A transmitter that is configured to use a numerical method to design reference signals for multiple input multiple output (MIMO) systems is also described. The transmitted includes a processor and memory in electronic communication with the processor. Instructions are stored in the memory. An input multiple input multiple output signal is determined. A nearest tight frame to one or more given structured vectors is obtained. One or more structured vectors from the nearest tight frame is obtained. The one or more structured vectors is projected onto the space of circulant matrices. One or more classes of matrices associated with reference signals are outputted.

A computer-readable medium comprising executable instructions is also described. An input multiple input multiple output signal is determined. A nearest tight frame to one or more given structured vectors is obtained. One or more structured vectors from the nearest tight frame is obtained. The one or more structured vectors is projected onto the space of circulant matrices. One or more classes of matrices associated with reference signals are outputted.

A method to generate sequences used for wireless communication systems is described. Initial sequences are set to a first set of sequences. A second set of sequences is obtained by projecting the first set of sequences to a space of tight frames. A third set of sequences is obtained by projecting each of subsets of the second set of sequences to a space of orthogonal matrices. A forth set of sequences is obtained by projecting the third set of sequences to a space of circulant matrices. A fifth set of sequences is obtained by projecting the forth set of sequences to a space of matrices with preferable PAPR. Said steps are iterate at least once by setting the fifth set of sequences to the first set of sequences. The fifth set of sequences after the iterating step has been executed is outputted.

In one example, a matrix may be provided on the unit hyper-sphere with non-zero components. The correlation between each of the one or more structured vectors may be outputted. A sequence set may be projected to a nearest tight frame. Subsets of a nearest tight frame may be projected to one or more orthogonal matrices. One or more orthogonal matrices may be projected to a nearest circulant matrix. Each sequence may be projected onto a minimum Peak to Average Power Ratio vector.

Many features of the embodiments disclosed herein may be implemented as computer software, electronic hardware, or combinations of both. To clearly illustrate this interchangeability of hardware and software, various components will be described generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Where the described functionality is implemented as computer software, such software may include any type of computer instruction or computer executable code located within a memory device and/or transmitted as electronic signals over a system bus or network. Software that implements the functionality associated with components described herein may comprise a single instruction, or many instructions, and may be distributed over several different code segments, among different programs, and across several memory devices.

## Claims

1.   A method to generate sequences used for wireless communication systems, the method comprising following steps:

   setting initial sequences to a first set of sequences (602);
   obtaining a second set of sequences by projecting the first set of sequences to a space of tight frames (604);
   obtaining a third set of sequences by projecting each of subsets of the second set of sequences to a space of orthogonal matrices (606);
   obtaining a forth set of sequences by projecting the third set of sequences to a space of circulant matrices (608);
   obtaining a fifth set of sequences by projecting the forth set of sequences to a space of matrices with a minimum peak to average power ratio, PAPR (610);
   iterating said steps at least once by setting the fifth set of sequences to the first set of sequences (612);

   characterized in that it further comprises the following steps:

   obtaining a sixth set of sequences by projecting each element of the fifth set of sequences after the iterating step has been executed to a nearest quadrature phase-shift keying, QPSK, constellation point (1002);
   outputting the sixth set of sequences;
   converting the sixth set of sequences into a time domain representation by performing an inverse discrete Fourier Transform, IDFT, on the sixth set of sequences to produce a seventh set of sequences (1004, 1006);
   evaluating a cubic metric of each sequence of the seventh set of sequences (1008);
   removing a sequence from the seventh set of sequences if the cubic metric exceeds a threshold to form a eighth set of sequences (1010); and
   forming a ninth set of sequences to obtain a minimum maximum cross-correlation from the eighth set of sequences (1012).

2.   A communication device for transmitting reference signals, the communication device comprising:

   a reference signal generator for generating the reference signals by using the ninth set of sequences obtained by executing the steps of the method as set forth in claim 1;
   a reference signal transmitter for transmitting the reference signals.

## Patentansprüche

1.   Verfahren zum Erzeugen von Sequenzen, die für Drahtlos-Kommunikationssysteme verwendet werden, wobei das Verfahren die folgenden Schritte umfasst:

   Einstellen von Anfangssequenzen auf eine erste Menge von Sequenzen (602);
   Gewinnen einer zweiten Menge von Sequenzen durch Projizieren der ersten Menge von Sequenzen in einen Raum enger Rahmen (604);
   Gewinnen einer dritten Menge von Sequenzen durch Projizieren jeder der Teilmengen der zweiten Menge von Sequenzen in einen Raum orthogonaler Matrizen (606);

Gewinnen einer vierten Menge von Sequenzen durch Projizieren der dritten Menge von Sequenzen in einen Raum zirkulanter Matrizen (608);

Gewinnen einer fünften Menge von Sequenzen durch Projizieren der vierten Menge von Sequenzen in einen Raum von Matrizen mit minimalem Verhältnis der Spitzenleistung zur Mittelleistung (Peak to Average Power Ratio, PAPR) (610);

Wiederholen dieser Schritte wenigstens einmal durch Einstellen der fünften Menge von Sequenzen auf die erste Menge von Sequenzen (612);

**dadurch gekennzeichnet, dass** es ferner die folgenden Schritte umfasst:

Gewinnen einer sechsten Menge von Sequenzen durch Projizieren jedes Elements der fünften Menge von Sequenzen, nachdem der Wiederholungsschritt ausgeführt worden ist, auf einen nächstgelegenen QPSK-Konstellationspunkt (Quadrature Phase-Shift Keying, Quadratur-Phasenmodulation) (1002);

Ausgeben der sechsten Menge von Sequenzen;

Konvertieren der sechsten Menge von Sequenzen in eine Zeitdomänendarstellung durch Ausführen einer inversen diskreten Fourier-Transformation, IDFT, an der sechsten Menge von Sequenzen, um eine siebte Menge von Sequenzen zu erzeugen (1004, 1006);

Auswerten einer Kubikmetrik jeder Sequenz der siebten Menge von Sequenzen (1008):

Entfernen einer Sequenz aus der siebten Menge von Sequenzen, falls die Kubikmetrik einen Schwellwert übersteigt, um eine achte Menge von Sequenzen zu bilden (1010); und

Bilden einer neunten Menge von Sequenzen, um eine minimale maximale Kreuzkorrelation aus der achten Menge von Sequenzen zu gewinnen (1012).

2. Kommunikationsvorrichtung zum Senden von Referenzsignalen, wobei die Kommunikationsvorrichtung umfasst:

einen Referenzsignalgenerator zum Erzeugen der Referenzsignale mittels der neunten Menge von Sequenzen, die durch Ausführen der Verfahrensschritte wie in Anspruch 1 beschrieben gewonnen wurde;

einen Referenzsignalsender zum Senden der Referenzsignale.

**Revendications**

1. Procédé permettant de générer des séquences utilisées pour des systèmes de communication sans fil, le procédé comprenant les étapes suivantes :

fixer des séquences initiales à un premier ensemble de séquences (602) ;

obtenir un deuxième ensemble de séquences en projetant le premier ensemble de séquences dans un espace de trames étroites (604) ;

obtenir un troisième ensemble de séquences en projetant chacun des sous-ensembles du deuxième ensemble de séquences dans un espace de matrices orthogonales (606) ;

obtenir un quatrième ensemble de séquences en projetant le troisième ensemble de séquences dans un espace de matrices circulantes (608) ;

obtenir un cinquième ensemble de séquences en projetant le quatrième ensemble de séquences dans un espace de matrices avec un facteur de crête PAPR (« peak to average power ratio ») minimum (610) ;

itérer lesdites étapes au moins une fois en fixant le cinquième ensemble de séquences au premier ensemble de séquences (612) ;

**caractérisé en ce qu'**il comprend en outre les étapes suivantes :

obtenir un sixième ensemble de séquences en projetant chaque élément du cinquième ensemble de séquences après que l'étape d'itération a été exécutée sur un point de constellation de modulation par déplacement de phase en quadrature, QPSK, le plus proche (1002) ;

produire le sixième ensemble de séquences ;

convertir le sixième ensemble de séquences dans une représentation de domaine temporel en exécutant une transformée de Fourier discrète inverse, IDFT, sur le sixième ensemble de séquences pour produire un septième ensemble de séquences (1004, 1006) ;

évaluer une mesure cubique de chaque séquence du septième ensemble de séquences (1008) ;

supprimer une séquence du septième ensemble de séquences si la mesure cubique excède un seuil pour former un huitième ensemble de séquences (1010) ; et

former un neuvième ensemble de séquences pour obtenir une corrélation croisée maximum minimum à partir du huitième ensemble de séquences (1012).

2. Dispositif de communication permettant de transmettre des signaux de référence, le dispositif de communication comprenant :

un générateur de signal de référence destiné à générer les signaux de référence en utilisant le neuvième ensemble de séquences obtenu en exécutant les étapes du procédé selon la revendication 1 ;

un émetteur de signal de référence destiné à transmettre les signaux de référence.

FIG. 1

100

Base Station
102

106

1st User
104a

2nd User
104b

⋮

Nth User
104n

FIG. 2

206

210

208

FIG. 3

```
┌──────────────┐      1ˢᵗ Channel 306a      ┌──────────────┐
│    OFDM      │ ══════════════════════════▷ │    OFDM      │
│ Transmitter  │                             │  Receiver    │
│     312      │ ◁════════════════════════   │     314      │
│              │      2ⁿᵈ Channel 306b       │              │
└──────────────┘                             └──────────────┘
```

FIG. 4

FIG. 5

500

502

Transmitter
504

End Processing
506

508

Reference
Processing
510

512

Data Symbols

Modulation
514

516

Other
Subsystems
518

EP 2 122 879 B1

16

FIG. 6

600

Initial
Sequence
Retriever
*602*

First Sequence
Projection
Component
*604*

Subsets
Projection
Component
*606*

Matrices
Projection
Component
*608*

Second Sequence
Projection
Component
*610*

Sequence
Output
Component
*614*

Iterator
*612*

EP 2 122 879 B1

**FIG. 7**

700

```
            ┌─────────┐
            │  Start  │
            └────┬────┘
                 │
                 ▼
┌──────────────────────────────────────────────────┐
│  Verify the existence of a fixed point of a MIMO  │ ~702
│                    signal                         │
└──────────────────────┬───────────────────────────┘
                       │
                       ▼
┌──────────────────────────────────────────────────┐
│  Obtain a nearest tight frame to one or more      │ ~704
│              structured vectors                   │
└──────────────────────┬───────────────────────────┘
                       │
                       ▼
┌──────────────────────────────────────────────────┐
│  Obtain one or more structured vectors from the   │ ~706
│              nearest tight frame                  │
└──────────────────────┬───────────────────────────┘
                       │
                       ▼
┌──────────────────────────────────────────────────┐
│  Project the one or more structured vectors onto  │ ~708
│         the space of circulant matrices           │
└──────────────────────┬───────────────────────────┘
                       │
                       ▼
┌──────────────────────────────────────────────────┐
│        Output one or more class of matrices       │ ~710
└──────────────────────┬───────────────────────────┘
                       │
                       ▼
                  ┌─────────┐
                  │   End   │
                  └─────────┘
```

EP 2 122 879 B1

FIG. 8

800

```
                    ( Start )
                        │
                        ▼
┌─────────────────────────────────────────────────────────────┐
│ Provide a first matrix on the unit hyper-sphere with         │──802
│ non-zero components                                          │
└─────────────────────────────────────────────────────────────┘
                        │
                        ▼
┌─────────────────────────────────────────────────────────────┐
│ Compute a second matrix that is a nearest tight frame to     │──804
│ the first matrix                                             │
└─────────────────────────────────────────────────────────────┘
                        │
                        ▼
┌─────────────────────────────────────────────────────────────┐
│ Compute a third matrix that is the closest matrix with       │──806
│ minimum peak to average power ratio to the second matrix     │
└─────────────────────────────────────────────────────────────┘
                        │
                        ▼
┌─────────────────────────────────────────────────────────────┐
│ Compute a fourth matrix from the expansion of the third      │──808
│ matrix                                                       │
└─────────────────────────────────────────────────────────────┘
                        │
                        ▼
┌─────────────────────────────────────────────────────────────┐
│ Compute a fifth matrix that is a nearest circulant matrix    │──810
│ to the fourth matrix                                         │
└─────────────────────────────────────────────────────────────┘
                        │
                        ▼
┌─────────────────────────────────────────────────────────────┐
│ Set the first matrix to the fifth matrix                     │──812
└─────────────────────────────────────────────────────────────┘
                        │
                        ▼
┌─────────────────────────────────────────────────────────────┐
│ Output the fourth matrix and the fifth matrix and a maximum  │──814
│ of the fourth matrix and the fifth matrix                    │
└─────────────────────────────────────────────────────────────┘
                        │
                        ▼
                    ( End )
```

EP 2 122 879 B1

**FIG. 9**

$900$

Start

Provide a matrix $Z_0 \, \mathbb{C}^{d \times N}$ on the unit hyper-sphere with non-zero components ~902

Compute $\alpha (Z Z^H)^{1/2} Z \longrightarrow Y$ ~904

Compute $(\alpha ( W_m^H W_m )^{1/2} W_m^H)^H \longrightarrow V_m$ ~906

Compute a **Q** matrix that is a nearest circulant matrix to the **V** matrix ~908

Compute a **W** matrix that is the closest matrix with minimum peak to average power ratio to the **Y** matrix ~910

Set the **Z** matrix as the **Q** matrix ~912

Output the **V** matrix and the **Q** matrix and a max $_{k \neq n} <v_k, \, v_n>$ and a max $_{k \neq n} <q_k, \, q_n>$ ~914

End

FIG. 10

1000

Start

Project each element of each sequence to a nearest constellation point to produce a first set of sequences ~1002

Convert the first set of sequences into a time domain representation to produce a second set of sequences ~1004

Perform an inverse discrete Fourier transform (DFT) to produce a third set of sequences ~1006

Evaluate the cubic metric of each sequence of the third set of sequences ~1008

Remove a sequence from the third set of sequences if the cubic metric exceeds a threshold to form a fourth set of sequences ~1010

Form a fifth set of sequences to obtain a minimum maximum cross-correlation ~1012

End

FIG. 11